(19) Europäisches Patentamt / European Patent Office / Office européen des brevets

(11) **EP 4 773 217 A1**

(12) **EUROPEAN PATENT APPLICATION**
published in accordance with Art. 153(4) EPC

(43) Date of publication:
**08.07.2026 Bulletin 2026/28**

(21) Application number: **25869569.1**

(22) Date of filing: **26.09.2025**

(51) International Patent Classification (IPC):
*H01M 4/136* (2010.01)     *H01M 4/58* (2010.01)
*H01M 4/62* (2006.01)      *H01M 4/36* (2006.01)
*H01M 10/0525* (2010.01)    *H01M 4/02* (2006.01)

(52) Cooperative Patent Classification (CPC):
**H01M 4/02; H01M 4/136; H01M 4/36; H01M 4/58;
H01M 4/62; H01M 10/0525;** Y02E 60/10

(86) International application number:
**PCT/KR2025/015232**

(87) International publication number:
**WO 2026/071789 (02.04.2026 Gazette 2026/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **27.09.2024 KR 20240131920**

(71) Applicant: **LG Energy Solution, Ltd.
Seoul 07335 (KR)**

(72) Inventors:
• **KIM, Young Jae
  Daejeon 34122 (KR)**
• **PARK, Joo Yong
  Daejeon 34122 (KR)**
• **LIM, Han Min
  Daejeon 34122 (KR)**
• **KIM, Tae Gon
  Daejeon 34122 (KR)**

(74) Representative: **Hoffmann Eitle
Patent- und Rechtsanwälte PartmbB
Arabellastraße 30
81925 München (DE)**

(54) **POSITIVE ELECTRODE AND LITHIUM SECONDARY BATTERY COMPRISING SAME**

(57)     The present invention relates to a positive electrode comprising a current collector, and a positive electrode active material layer disposed on the current collector, wherein the positive electrode active material layer comprises a positive electrode active material, a conductive agent, and a binder, the positive electrode active material comprises a lithium iron phosphate-based compound, the conductive agent comprises carbon black, the conductive agent has a BET specific surface area of 200 m²/g to 400 m²/g, and a value of $R_1$ represented by Equation 1 below is 180 to 500, and a lithium secondary battery comprising the same.

$$R_1 = \frac{[\text{Average particle diameter } (D_{50}) \text{ value of positive electrode active material}] \times [\text{BET specific surface area value of conductive agent}]}{[\text{Average particle diameter } (D_{50}) \text{ value of conductive agent}]^2} \qquad \text{[Equation 1]}$$

In Equation 1, the average particle diameter ($D_{50}$) value (μm) of positive electrode active material, the BET specific surface area value (m²/g) of conductive agent, and the average particle diameter ($D_{50}$) value (μm) of conductive agent are dimensionless numbers with the units omitted.

EP 4 773 217 A1

**Description**

**TECHNICAL FIELD**

The present application claims the benefit of priority based on Korean Patent Application No. 10-2024-0131920, filed on September 27, 2024, the entire contents disclosed in the Korean Patent Application are incorporated herein as a part of the specification.

The present invention relates to a positive electrode and lithium secondary battery comprising the same.

**BACKGROUND ART**

Lithium secondary batteries are typically manufactured by a method of interposing a separator between a positive electrode containing a lithium-containing positive electrode active material and a negative electrode containing a negative electrode active material capable of storing lithium ions to form an electrode assembly, inserting the electrode assembly into a battery case, injecting a non-aqueous electrolyte, which serves as a lithium ion transport medium, and sealing the electrode assembly.

The lithium secondary batteries are used not only in portable electronic devices such as mobile phones and laptops, but also in electric vehicles, and demand for the batteries has been rapidly increasing with the recent expansion of electric vehicles. In particular, lithium secondary batteries used in electric vehicles require high energy density and excellent charge rate characteristics.

Meanwhile, lithium cobalt-based oxides, lithium nickel-based oxides, lithium manganese-based oxides, lithium nickel cobalt manganese-based oxides, lithium manganese phosphate-based compounds, and lithium iron phosphate-based compounds are used as positive electrode active materials for lithium secondary batteries.

Among them, lithium iron phosphate-based compounds are widely used as positive electrode active materials for lithium secondary batteries due to excellent thermal stability, excellent life characteristics, safety, and low cost, but due to relatively small particle size compared to ternary positive electrode active materials, it is difficult to form a conductive network, resulting in reduced conductivity

Accordingly, the development of lithium secondary batteries that incorporate lithium iron phosphate-based compounds, which exhibit excellent thermal stability and life characteristics is required despite of using lithium iron phosphate-based compounds having a small particle size.

**DISCLOSURE OF THE INVENTION**

**TECHNICAL PROBLEM**

The present invention is to provide a positive electrode having improved life characteristics and a lithium secondary battery including the same, by ensuring that the average particle diameter ($D_{50}$) of a positive electrode active material including a lithium iron phosphate-based compound, the average particle diameter ($D_{50}$) of a conductive agent including carbon black, and a BET specific surface area, satisfy a specific equation.

**TECHNICAL SOLUTION**

[1] The present invention provides a positive electrode comprising a current collector and a positive electrode active material layer disposed on the current collector, wherein the positive electrode active material layer comprises a positive electrode active material, a conductive agent, and a binder, the positive electrode active material comprises a lithium iron phosphate-based compound, the conductive agent comprises carbon black, the conductive agent has a BET specific surface area of 200 m²/g to 400 m²/g, and a value of $R_1$ represented by Equation 1 below is 180 to 500.

$R_1$ = {[Average particle diameter ($D_{50}$) value of positive electrode active material] × [BET specific surface area value of conductive agent]} / [Average particle diameter ($D_{50}$) value of conductive agent]²     [Equation 1]

In Equation 1, the average particle diameter ($D_{50}$) value (μm) of positive electrode active material, the BET specific surface area value (m²/g) of conductive agent, and the average particle diameter ($D_{50}$) value (μm) of conductive agent are a dimensionless number with the units omitted.

[2] The present invention provides the positive electrode according to [1], wherein a value of $R_2$ represented by

Equation 2 below is 0.9 to 1.1.

$R_2$ = [Average particle diameter ($D_{50}$) value of positive electrode active material] / [Average particle diameter ($D_{50}$) value of conductive agent].     [Equation 2]

[3] The present invention provides the positive electrode according to [1] or [2], wherein a value of $R_3$ represented by Equation 3 below is 200 to 450.

$R_3$ = [BET specific surface area value of conductive agent] / [Average particle diameter ($D_{50}$) value of conductive agent]     [Equation 3]

In Equation 3, the BET specific surface area value ($m^2/g$) of conductive agent and the average particle diameter ($D_{50}$) value ($\mu$m) of conductive agent are dimensionless numbers with the units omitted.

[4] The present invention provides the positive electrode according to at least one among [1] to [3], wherein an average particle diameter ($D_{50}$) of the conductive agent is 0.7 $\mu$m to 1.3 $\mu$m.

[5] The present invention provides the positive electrode according to at least one among [1] to [4], wherein an average particle diameter ($D_{30}$) of the positive electrode active material is 0.6 $\mu$m to 1.6 $\mu$m.

[6] The present invention provides the positive electrode according to at least one among [1] to [5], wherein the lithium iron phosphate-based compound is represented by Formula 1 below.

[Formula 1]     $Li_{1+x}[Fe_{1-y}M_y]PO_4$

In Formula 1, M comprises one or more selected from the group consisting of Ni, Co, Mn, Al, Mg, Y, Zn, In, Ru, Sn, Sb, Ti, Te, Nb, Mo, Cr, Zr, W, Ir, and V, $-0.5 \leq x \leq 0.5$, and $0 \leq y < 1$.

[7] The present invention provides the positive electrode according to at least one among [1] to [6], wherein the conductive agent is comprised in 0.5 wt% to 5.0 wt% based on a total weight of the positive electrode active material layer.

[8] The present invention provides the positive electrode according to at least one among [1] to [7], wherein the positive electrode active material further comprises a conductive coating layer.

[9] The present invention provides the positive electrode according to at least one among [1] to [8], wherein a weight ratio of the positive electrode active material and the conductive agent is 90:10 to 99:1.

[10] The present invention provides the positive electrode according to at least one among [1] to [9], wherein the binder comprises one or more selected from the group consisting of styrene-butadiene rubber (SBR), carboxymethyl cellulose (CMC), polyvinylidene fluoride (PVDF) and polytetrafluoroethylene (PTFE).

[11] The present invention provides the positive electrode according to at least one among [1] to [10], wherein the positive electrode has a porosity of 15% to 40%.

[12] The present invention provides a lithium secondary battery comprising the positive electrode according to at least one among [1] to [11].

## ADVANTAGEOUS EFFECTS

The positive electrode according to the present invention is adjusted so that the average particle diameter ($D_{50}$) of a conductive agent including carbon black is similar to the average particle diameter ($D_{50}$) of a positive electrode active material including lithium iron phosphate-based compound by controlling the BET specific surface area of the conductive agent, and has the effect of facilitating the formation of a conductive network within an electrode, and consequently may exhibit excellent life characteristics of the positive electrode and a lithium secondary battery.

## BEST MODE FOR CARRYING OUT THE INVENTION

Hereinafter, the present invention will be described in more detail.

Words or terms used in the description and claims of the present invention shall not be interpreted as the meaning defined in commonly used dictionaries. The words or terms should be interpreted as having a meaning that is consistent with their meaning in the technical idea of the invention, based on the principle that an inventor may properly define the meaning of the words to best explain the invention.

In the present invention, the terms "comprise," "include," or "have" are intended to indicate the presence of a specified feature, number, step, component, or combination thereof, but should be understood not to preclude the presence or addition of one or more other features, numbers, steps, components, or combinations thereof.

In the present invention, the "BET specific surface area" is measured using a BET method, specifically, may be calculated from the nitrogen gas adsorption amount at liquid nitrogen temperature (77K) using a BELSORP-mino II from BEL Japan.

In the present invention, the "average particle diameter ($D_{50}$)" refers to the particle size at 50% of the volume-cumulative particle size distribution. The average particle diameter ($D_{50}$) may be measured using a laser diffraction method. The laser diffraction method generally allows for the measurement of particle diameters ranging from submicron to several millimeters, and may produce results with high reproducibility and high resolution.

In the present invention, the "secondary particle" refers to a particle formed by the aggregation of tens to hundreds of primary particles. More specifically, the secondary particle is an aggregate of 50 or more primary particles.

Hereinafter, the present invention will be described in detail.

The positive electrode and lithium secondary battery according to the present invention include at least one of the configurations disclosed below and may include any combination of the configurations technically possible among the configurations described below.

**<Positive Electrode>**

Hereinafter, the positive electrode according to the present invention will be described.

The positive electrode according to the present invention includes a current collector and a positive electrode active material layer disposed on the current collector, the positive electrode active material layer includes a positive electrode active material, a conductive agent, and a binder, the positive electrode active material includes a lithium iron phosphate-based compound, the conductive agent includes carbon black, the conductive agent has a BET specific surface area of 200 m$^2$/g to 400 m$^2$/g, and the value of $R_1$ represented by Equation 1 below is 180 to 500.

$$R_1 = \frac{\text{[Average particle diameter }(D_{50})\text{ value of positive electrode active material]} \times \text{[BET specific surface area value of conductive agent]}}{\text{[Average particle diameter }(D_{50})\text{ value of conductive agent]}^2} \qquad \text{[Equation 1]}$$

In Equation 1, the average particle diameter ($D_{50}$) value (μm) of positive electrode active material, the BET specific surface area value (m$^2$/g) of conductive agent, and the average particle diameter ($D_{50}$) value (μm) of conductive agent are all dimensionless numbers with the units omitted.

Since positive electrode active materials containing lithium iron phosphate-based compounds have relatively small average particle diameters ($D_{50}$) compared to nickel-cobalt-manganese ternary positive electrode active materials, a conductive agent that is uniformly dispersed and has a small average particle diameter ($D_{50}$) is required to form a conductive network within an electrode. However, carbon nanotubes, which are conventionally widely used as conductive agents, are several micrometers (μm) long but only tens of nanometers (nm) in diameter and lead to particle agglomeration, thereby making uniform dispersion difficult when mixed with positive electrode active materials having a small average particle diameter ($D_{50}$), and resulting in insufficient electrical conduction paths.

However, carbon black, composed of extremely fine, nearly spherical particles, has the advantage of being easily mixed with positive electrode active materials containing lithium iron phosphate-based compounds, enabling uniform dispersion and forming consistent conduction paths within an electrode, and forming a conductive network.

Accordingly, the inventors of the present invention used carbon black as a conductive agent, which may maintain dispersibility even when mixed with a positive electrode active material having a small average particle diameter ($D_{50}$), such as a positive electrode active material including a lithium iron phosphate-based compound, and in order to optimize the dispersibility, the BET specific surface area of the carbon black conductive agent was increased, and the average particle diameter ($D_{50}$) of the carbon black conductive agent was adjusted to be similar to the average particle diameter ($D_{50}$) of the positive electrode active material including a lithium iron phosphate-based compound, thereby realizing excellent electrical conductivity by forming a conductive network by connecting the positive electrode active materials with the conductive agent, and by including such a positive electrode, a lithium secondary battery exhibiting excellent life characteristics was developed.

Hereinafter, the positive electrode according to the present invention will be described in more detail.

The positive electrode according to the present invention has a value $R_1$ of 180 to 500, as represented by Equation 1 below.

$$R_1 = \frac{\text{[Average particle diameter }(D_{50})\text{ value of positive electrode active material]} \times \text{[BET specific surface area value of conductive agent]}}{\text{[Average particle diameter }(D_{50})\text{ value of conductive agent]}2} \qquad \text{[Equation 1]}$$

In Equation 1, the average particle diameter ($D_{50}$) value (μm) of positive electrode active material, the BET specific surface area value (m$^2$/g) of conductive agent, and the average particle diameter ($D_{50}$) value (μm) of conductive

agent are each dimensionless numbers with the units omitted.

When the value of $R_1$ is less than 180, the BET specific surface area of the conductive agent is too small or the average particle diameter ($D_{50}$) of the conductive agent is too large, and as a result, the conductive agent is not uniformly distributed with the positive electrode active material, so a conductive network is not properly formed, and the contact area with the positive electrode active material including a lithium iron phosphate-based compound having a small average particle diameter ($D_{50}$) is insufficient, so that the electrical conductivity of the electrode is reduced and the life characteristics of the battery are deteriorated. In addition, the contact area between the conductive agent and an electrolyte is reduced, so that the electrode reaction is inefficient, which reduces the activation of the electrode and causes a problem of deterioration in the life characteristics of the battery. When the value of $R_1$ exceeds 500, the BET specific surface area of the conductive agent is excessively large or the average particle diameter ($D_{50}$) of the conductive agent is excessively small, and excessive reaction with the electrolyte may be performed, resulting in excessive formation of a solid electrolyte interphase (SEI) layer, which increases resistance and deteriorates battery life characteristics. Furthermore, the average particle diameter ($D_{50}$) of the conductive agent is excessively small, which may cause agglomeration and prevent uniform distribution of the conductive agent.

Specifically, the value of $R_1$ may be 200 or greater, 215 or greater, or 250 or greater, more specifically 280 or greater, or 480 or less, 430 or less, or 380 or less, more specifically 330 or less. When the range is satisfied, a balanced interaction between the conductive agent and the positive electrode active material may be performed, enhancing the electrical conductivity of the electrode. The appropriate distribution of the conductive agent and the formation of a stable conductive network may be formed to reduce resistance and maximize battery life characteristics.

In addition, the value of $R_2$ represented by Equation 2 below, may be from 0.9 to 1.2, specifically from 0.9 to 1.18, and more specifically from 0.95 to 1.15.

$$R_2 = \text{[Average particle diameter ($D_{50}$) value of positive electrode active material] / [Average particle diameter ($D_{50}$) value of conductive agent]} \qquad \text{[Equation 2]}$$

When the value of $R_2$ satisfies the above range, the average particle diameters ($D_{50}$) of the positive electrode active material and conductive agent are similar, resulting in uniform dispersion within an electrode, and in the formation of a stable conductive network. Furthermore, the contact area between the positive electrode active material and conductive agent is increased, facilitating more efficient electrochemical reactions and improving battery life characteristics.

In addition, the value of $R_3$ represented by Equation 3 below, may be from 200 to 550, specifically from 210 to 520, and more specifically from 210 to 300.

$$R_3 = \text{[BET specific surface area value of conductive agent] / [Average particle size ($D_{50}$) value of conductive agent]} \qquad \text{[Equation 3]}$$

In Equation 3, the BET specific surface area value ($m^2/g$) and the average particle size ($D_{30}$) value ($\mu m$) of conductive agent are dimensionless numbers with the units omitted.

If the value of $R_3$ satisfies the above range, it means that the BET specific surface area value of the conductive agent is appropriately large and the average particle diameter ($D_{30}$) value of the conductive agent is appropriately small. This balance allows the conductive agent to form a uniform electron transfer path within the electrode, ensuring stable electrode operation during the charge and discharge process of the battery, thereby achieving high capacity retention. Furthermore, by controlling the BET specific surface area of the conductive agent so that it is not excessive, the formation of a solid electrolyte interphase (SEI) layer is also controlled so that it is not excessive, thereby minimizing the increase in internal resistance of the battery and reducing the rate of resistance increase.

Meanwhile, the current collector according to the present invention is not particularly limited as long as it is conductive and does not induce chemical changes in the battery. For example, stainless steel, aluminum, nickel, titanium, calcined carbon, or aluminum or stainless steel, surface-treated with carbon, nickel, titanium, silver, or the like may be used.

In addition, the current collector typically has a thickness of 3 $\mu m$ to 500 $\mu m$, and more specifically, a thickness of 300 $\mu m$ or less, 200 $\mu m$ or less, 100 $\mu m$ or less, or 80 $\mu m$ or less. Fine unevenness may be formed on the surface of the current collector to enhance the adhesion of the positive electrode active material. For example, the current collector may be used in various forms, such as films, sheets, foils, nets, porous bodies, foams, and non-woven fabrics.

The positive electrode active material layer is disposed on the current collector. The positive electrode active material layer may be disposed on at least one surface of the current collector. Specifically, the positive electrode active material layer may be disposed on one or both surfaces of the current collector.

The positive electrode active material layer includes a positive electrode active material, a conductive agent, and a binder.

First, the conductive agent of the present invention will be described.

The conductive agent of the present invention includes carbon black. Carbon black has high electrical conductivity and, when mixed with the positive electrode active material, may significantly enhance electrical conductivity. Carbon black is composed of fine particles, providing a large specific surface area, which increases the contact area with the positive electrode active material and a denser conductive path, thereby improving the conductive network. Furthermore, the carbon black may be evenly dispersed, allowing for uniform distribution of the conductive agent even when applied to positive electrode active materials containing lithium iron phosphate-based compounds with small particle sizes, thereby maintaining consistent performance throughout the electrode. Particle size control is easily achieved based on the size of the positive electrode active material, and it is effective for use with small particles, such as positive electrode active materials containing lithium iron phosphate-based compounds.

The carbon black may include secondary particles formed by agglomeration of primary carbon black particles, specifically, may be secondary particles. By controlling the particle diameter of the primary particles, the BET specific surface area of the carbon black may be controlled. The BET specific surface area of the conductive agent is 200 $m^2/g$ to 400 $m^2/g$. When the BET specific surface area of the conductive agent is less than 200 $m^2/g$, the average particle diameter ($D_{50}$) of the conductive agent becomes excessively large compared to the average particle diameter ($D_{50}$) of the positive electrode active material including the lithium iron phosphate-based compound, so that the contact area between the conductive agent and the positive electrode active material including the lithium iron phosphate-based compound decreases, which weakens the conductive network and reduces the energy density. In addition, when the BET specific surface area of the conductive agent exceeds 400 $m^2/g$, the average particle diameter ($D_{50}$) of the conductive agent becomes excessively small and causes aggregation with each other, which causes a problem in that the viscosity is high and uniform dispersion is not achieved during the subsequent preparation of a positive electrode slurry.

Specifically, the BET specific surface area of the conductive agent may be 220 $m^2/g$ or more, more specifically 230 $m^2/g$ or more, and specifically 350 $m^2/g$ or less or 320 $m^2/g$ or less, and more specifically 290 $m^2/g$ or less. When included within the above range, the conductive agent may have a similar average particle diameter ($D_{50}$) to the positive active material including the lithium iron phosphate-based compound, thereby optimizing the contact area between the positive active material and the conductive agent, thereby effectively forming an electron transfer path and improving the energy density and charge and discharge efficiency of a battery, and there is an effect that the conductive agent may be uniformly dispersed in the positive electrode slurry later.

The average particle diameter ($D_{50}$) of the conductive agent may be 0.7 $\mu$m to 1.3 $\mu$m, specifically 0.8 $\mu$m to 1.2 $\mu$m, and more specifically 0.85 $\mu$m to 1.15 $\mu$m. When the above range is satisfied, the average particle diameter ($D_{50}$) of the positive electrode active material including the lithium iron phosphate-based compound is similar, so that the positive electrode active material and the conductive agent are evenly mixed to form an efficient conductive network within the electrode, and the conductive agent is easily dispersed, so that the conductive agent may be uniformly mixed within the positive electrode slurry later.

The conductive agent may be included in an amount of 0.5 wt% to 5.0 wt%, specifically 0.8 wt% to 4.0 wt%, and more specifically 1.0 wt% to 2.0 wt%, based on the total weight of the positive electrode active material layer. When included within the above range, the electrode capacity is excellent, and the effect of conductive path formation may be maximized by optimizing the dispersibility.

Next, the positive electrode active material of the present invention will be described.

The positive electrode active material of the present invention includes a lithium iron phosphate-based compound. Lithium iron phosphate-based compounds have the advantage of excellent thermal stability, thereby having excellent lifespan characteristics and stability of lithium secondary batteries.

The lithium iron phosphate-based compound may be represented by Formula 1 below.

[Formula 1] $\quad$ $Li_{1+x}[Fe_{1-y}M_y]PO_4$

In Formula 1, M may include one or more selected from the group consisting of Ni, Co, Mn, Al, Mg, Y, Zn, In, Ru, Sn, Sb, Ti, Te, Nb, Mo, Cr, Zr, W, Ir, and V. The lithium iron phosphate-based compound may be doped with M. In this case, the diffusivity of lithium ions is increased, and as a result, the electrochemical characteristics of a lithium secondary battery including the positive electrode active material may be improved.

In addition, x may be $-0.5 \leq x \leq 0.5$, specifically $-0.2 \leq x \leq 0.2$, more specifically $-0.1 \leq x \leq 0.1$.

In addition, y may be $0 \leq y < 1$, specifically $0 \leq y < 0.3$, more specifically $0 \leq y < 0.05$.

The lithium iron phosphate-based compound may be, for example, $LiFePO_4$, $Li(Fe,Mn)PO_4$, $Li(Fe,Co)PO_4$, $Li(Fe,Ni)PO_4$, or a mixture thereof, and may be specifically $LiFePO_4$.

The lithium iron phosphate-based compound may further include a conductive coating layer on the surface thereof. The conductive coating layer is for improving the conductivity of the lithium iron phosphate-based compound and may include one or a mixture of two or more selected from the group consisting of carbon-based materials, metals, and conductive polymers. Among them, when a conductive coating layer of a carbon-based material is included, the conductivity may be effectively improved without significantly increasing the weight of the lithium iron phosphate-based compound.

The conductive coating layer may be formed according to the conventional coating layer formation method and may be present in an amount of 1 wt% to 7 wt%, specifically 1 wt% to 5 wt%, based on the total weight of the lithium iron phosphate-based compound. When included in this range, the LFP content may be relatively reduced, preventing deterioration of battery characteristics and improving conductivity according to the formation of the conductive layer.

The average particle diameter ($D_{50}$) of the positive electrode active material may be 0.6 $\mu$m to 1.6 $\mu$m, specifically 0.8 $\mu$m to 1.4 $\mu$m, and more specifically 0.85 $\mu$m to 1.2 $\mu$m. When the above range is satisfied, the small particle size reduces the passage of lithium ions into and out of the positive electrode active material, which is advantageous in terms of capacity and output.

The positive electrode active material may be included in an amount of 80 wt% to 99 wt%, specifically 90 wt% to 98 wt%, and more specifically 95 wt% to 98 wt%, based on the total weight of the positive electrode active material layer. When included in this range, the electrode has excellent capacity and energy density and may exhibit excellent effects in both optimizing the functions of the conductive agent and binder.

The weight ratio of the positive electrode active material and the conductive agent may be 90:10 to 99:1, specifically 95:5 to 99:1, and more specifically 96:4 to 99:1. When the range is satisfied, a balance is achieved between the positive electrode active material and the conductive agent, providing a sufficient electron transport path within the electrode, thereby stably operating the electrode during charge and discharge, minimizing capacity degradation of the lithium secondary battery and suppressing resistance increase.

Next, the binder of the present invention will be described.

The binder of the present invention serves to enhance the adhesion between positive electrode active material particles and the adhesion between the positive electrode active material and the current collector. Preferably, the binder may include one or more selected from the group consisting of styrene-butadiene rubber (SBR), carboxymethyl cellulose (CMC), polyvinylidene fluoride (PVDF), and polytetrafluoroethylene (PTFE).

The binder may be included in an amount of 0.1 wt% to 10.0 wt%, specifically 1.0 wt% to 5.0 wt%, and more specifically 2.0 wt% to 4.0 wt%, based on the total weight of the positive electrode active material layer. When the binder content is within the range, it is effective in increasing the energy density per volume, lowering the electrode resistance, and maintaining the adhesive strength of the electrode.

The positive electrode may have a porosity of 15% to 40%, specifically 20% to 35%, and more specifically 25% to 30%. When this range is satisfied, electrolyte impregnation is improved, resulting in even better capacity characteristics.

The positive electrode may be manufactured by a method known in the art. For example, the positive electrode may be manufactured by mixing a positive electrode active material, a binder, and a conductive agent in a solvent to prepare a positive electrode slurry, applying the positive electrode slurry onto a current collector, followed by drying and rolling. Alternatively, the positive electrode slurry may be cast onto a separate support and peeled from the support, and then, the resulting film is laminated onto a current collector. In this case, as the solvent of the positive electrode slurry, positive electrode slurry solvents generally used in the relevant technical field may be used, and for example, dimethyl sulfoxide (DMSO), isopropyl alcohol, N-methylpyrrolidone (NMP), acetone, water, or a mixture thereof may be used, without limitation. The solvent may be used in an amount that dissolves or disperses the positive electrode active material, conductive agent, and binder and has a viscosity that allows the negative electrode slurry to be uniformly coated.

**<Lithium Secondary Battery>**

Hereinafter, a lithium secondary battery according to the present invention will be described.

The lithium secondary battery according to the present invention includes: a positive electrode according to the present invention; a negative electrode positioned opposite to the positive electrode; and an electrolyte. Optionally, the lithium secondary battery according to the present invention may further include a separator interposed between the positive electrode and the negative electrode.

Since the positive electrode is the same as described above, the remaining constituent elements excluding the positive electrode will be described below.

**(1) Negative Electrode**

In the lithium secondary battery according to the present invention, the negative electrode may include a negative electrode current collector and a negative electrode active material layer disposed on the negative electrode current collector. The negative electrode active material layer may include a negative electrode active material, a binder, and a conductive agent.

The negative electrode current collector is not particularly limited as long as it has high conductivity and does not induce chemical changes in the battery. For example, copper, stainless steel, aluminum, nickel, titanium, heat-treated carbon, copper or stainless steel, surface-treated with carbon, nickel, titanium, silver, or the like, and aluminum-cadmium alloys, may be used.

The negative electrode current collector typically has a thickness of 3 $\mu$m to 500 $\mu$m, and more specifically, a thickness of 300 $\mu$m or less, 200 $\mu$m or less, 100 $\mu$m or less, or 80 $\mu$m or less. Fine unevenness may be formed on the surface of the current collector to enhance adhesion with the negative electrode active material. For example, the negative electrode current collector may be used in various forms, such as films, sheets, foils, nets, porous bodies, foams, and non-woven fabrics.

The negative electrode active material layer may be disposed on the negative electrode current collector. The negative electrode active material layer may be disposed on at least one surface of the negative electrode current collector. Specifically, the negative electrode active material layer may be disposed on one side or both sides of the negative electrode current collector.

The negative electrode active material may be a compound capable of reversible intercalation and deintercalation of lithium, for example, carbon materials such as artificial graphite, natural graphite, Kish graphite, pyrolytic carbon, meso-carbon microbeads, mesophase pitches, petroleum or coal tar pitch derived cokes, mesophase pitch-based carbon fiber, graphitized carbon fiber, amorphous carbon, soft carbon, or hardened carbon; metalloid materials capable of alloying with lithium, such as Si, Al, Sn, Pb, Zn, Bi, In, Mg, Ga, Cd, Si alloy, Sn alloy, or Al alloy; metalloid oxide materials capable of doping and de-doping lithium, such as $SiO_b$ ($0<b\leq2$), $SnO_2$, vanadium oxide, and lithium vanadium oxide; hetero-composite materials, such as Si-C composites or Sn-C composites; or metallic lithium thin films, may be used, and one or a mixture of two or more thereof may be used.

Specifically, the negative electrode active material may include one or more selected from the group consisting of silicon-based active materials, carbon-based active materials, and silicon-carbon composite active materials. More specifically, the carbon-based active material may include one or more selected from the group consisting of artificial graphite, natural graphite, softened carbon, and hardened carbon, the silicon-based active material may include pure Si particles and/or $SiO_b$ ($0<b\leq2$), and the silicon-carbon composite active material may include a Si-C composite. Furthermore, the negative electrode active material may be a mixed active material in which two or more of the above-mentioned materials are mixed.

The negative electrode active material may be included, based on the total weight of the negative electrode active material layer, in an amount of 60 wt% to 99 wt%, and specifically, may be included in an amount of 70 wt% or more, 80 wt% or more, 85 wt% or more, or 90 wt% or more, and may also be included in an amount of 98 wt% or less, 97 wt% or less, or 95 wt% or less.

The binder is a component that assists in bonding between the conductive agent, the active material, and the current collector, and may typically be added in an amount of 0.1 wt% to 10 wt% based on the total weight of the negative electrode active material layer, and may be included in an amount of 0.2 wt% or more, 0.3 wt% or more, or 0.5 wt% or more, and may also be included in an amount of 8 wt% or less, or 5 wt% or less. Examples of the binder may include one or more selected from the group consisting of a styrene-butadiene copolymer, an acrylate styrene-butadiene copolymer, an acrylonitrile-butadiene copolymer, an acrylonitrile-butadiene-styrene copolymer, acrylic rubber, butyl rubber, fluoro rubber, polytetrafluoroethylene, polyethylene, polypropylene, ethylene propylene copolymer, polyethylene oxide, polyvinylpyrrolidone, polyepichlorohydrin, polyphosphazene, polyacrylonitrile, polystyrene, ethylene propylene diene copolymer, polyvinylpyridine, chlorosulfonated polyethylene, latex, a polyester resin, an acrylic resin, a phenol resin, an epoxy resin, and polyvinyl alcohol. Among them, one or more selected from the group consisting of a styrene-butadiene copolymer, an acrylate styrene-butadiene copolymer, an acrylonitrile-butadiene copolymer, an acrylonitrile-butadiene-styrene copolymer, carboxymethyl cellulose, hydroxypropylmethyl cellulose, hydroxypropyl cellulose, diacetyl cellulose, cellulose acetate butyrate, cellulose acetate propionate, cyanoethyl pullulan, cyanoethyl polyvinyl alcohol, cyanoethyl cellulose, and cyanoethyl sucrose, may be included. Specifically, it is preferable to apply carboxymethyl cellulose, hydroxypropylmethyl cellulose, hydroxypropyl cellulose, or a mixture thereof.

The conductive agent is a component for further improving the conductivity of the negative electrode active material, and may be added in an amount of 10 wt% or less, specifically 5 wt% or less, 3 wt% or less, 2 wt% or less, or 1 wt% or less, and may also be included in an amount of 0.01 wt% or more, 0.05 wt% or more, 0.08 wt% or more, 0.1 wt% or more, or 0.3 wt% or more, based on the total weight of the negative electrode active material layer. The conductive agent is not particularly limited as long as it has conductivity without causing a chemical change in the battery, and for example, graphite such as natural graphite or artificial graphite; carbon black such as acetylene black, Ketjen black, channel black, furnace black, lamp black, or thermal black; conductive fibers such as carbon fiber or metal fiber; fluorinated carbon; metal powder such as aluminum or nickel powder; conductive whisker of zinc oxide or potassium titanate; conductive metal oxides such as titanium oxide; and conductive agents such as polyphenylene derivatives, may be used.

The negative electrode active material layer may be manufactured by applying and drying a negative electrode slurry composition prepared by dissolving or dispersing a negative electrode active material, and optionally a binder and a conductive agent in a solvent, on a negative electrode current collector, or by casting the negative electrode slurry composition on a separate support, and then laminating a film obtained by peeling off from the support on a negative electrode current collector.

## (2) Electrolyte

The electrolyte may include, but is not limited to, organic liquid electrolytes, inorganic liquid electrolytes, solid polymer electrolytes, gel-type polymer electrolytes, solid inorganic electrolytes, and molten-type inorganic electrolytes that may be used in the manufacture of lithium secondary batteries.

The electrolyte may include a lithium salt and an organic solvent.

The lithium salt may be used without particular limitation as long as it is a compound capable of providing lithium ions used in lithium secondary batteries. Specifically, the anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$,

$(CF_3SO_2)_2CH^-$, $(SF_3)_3C^-$, $(CF_3SO_2)_3C^-$, $CF_3(CF_2)_7SO_3^-$, $CF_3CO_2^-$, $CH_3CO_2^-$, $SCN^-$ 및 $(CF_3CF_2SO_2)_2N^-$, and the lithium salt may use $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$ $LiN(C_2F_5SO_3)_2$, $LiN(C_2F_5SO_2)_2$, $LiN(CF_3SO_2)_2$, $LiCl$, $LiI$, or $LiB(C_2O_4)_2$. The concentration of the lithium salt is preferably within the range of 0.1 to 2.0 M. When the concentration of the lithium salt is within the range, the electrolyte may have appropriate conductivity and viscosity and may exhibit excellent electrolyte performance, and lithium ions may move effectively.

The organic solvent may be used without particular limitation as long as it can serve as a medium through which ions involved in the electrochemical reaction of the battery may move. Specifically, the organic solvent includes ester-based solvents such as methyl acetate, ethyl acetate, $\gamma$-butyrolactone, and $\varepsilon$-caprolactone; ether-based solvents such as dibutyl ether or tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methyl ethyl carbonate (MEC), ethyl methyl carbonate (EMC), ethylene carbonate (EC), and propylene carbonate (PC); alcohol-based solvents such as ethyl alcohol and isopropyl alcohol; nitriles such as R-CN (R represents a linear, branched, or cyclic hydrocarbon group having 2 to 20 carbon atoms and may include a double-bonded aromatic ring or an ether bond); amides such as dimethylformamide; dioxolanes such as 1,3-dioxolane; or sulfolanes. Among them, carbonate-based solvents are preferable, and a mixture of a cyclic carbonate (for example, ethylene carbonate or propylene carbonate) with high ionic conductivity and high dielectric constant that may improve the charge and discharge performance of the battery and a low-viscosity linear carbonate compound (for example, ethyl methyl carbonate, dimethyl carbonate, or diethyl carbonate) is more preferable.

In addition to the electrolyte components, the electrolyte may further include one or more additives, such as haloalkylene carbonate-based compounds such as difluoroethylene carbonate, pyridine, triethylphosphite, triethanolamine, cyclic ethers, ethylene diamine, n-glyme, hexamethylphosphoric acid triamide, nitrobenzene derivatives, sulfur, quinone imine dyes, N-substituted oxazolidinones, N,N-substituted imidazolidines, ethylene glycol dialkyl ethers, ammonium salts, pyrrole, 2-methoxyethanol, or aluminum trichloride, for the purpose of improving the life characteristics of the battery, suppressing battery capacity decrease, and improving the discharge capacity of the battery. In this case, the additives may be included in an amount of 0.1 to 5 wt% based on the total weight of the electrolyte.

## (3) Separator

The separator physically separates the negative electrode and the positive electrode and provides a path for lithium ions, and any separator typically used in lithium secondary batteries may be used without particular limitation. In this case, the separator may be disposed between the positive electrode and the negative electrode.

Specific examples include porous polymer films, for example, porous polymer films formed from polyolefin-based polymers such as ethylene homopolymer, propylene homopolymer, ethylene/butene copolymer, ethylene/hexene copolymer, and ethylene/methacrylate copolymer, or laminated structures of two or more layers thereof. In addition, typical porous non-woven fabrics, for example, non-woven fabrics formed from high-melting-point glass fibers or polyethylene terephthalate fibers, may also be used. Furthermore, coated separators containing ceramic components or polymer materials for securing heat resistance or mechanical strength may be used and may optionally be used in a single-layer or a multi-layer structure.

The lithium secondary battery according to the present invention may be usefully applied to portable devices such as mobile phones, laptop computers, and digital cameras, as well as electric vehicles such as hybrid electric vehicles (HEVs). The lithium secondary battery according to the present invention may achieve excellent output characteristics even at low temperature conditions, and may be particularly usefully used in the electric vehicle field.

According to another embodiment of the present invention, a battery module including the lithium secondary battery according to the present invention as a unit cell and a battery pack including the same are provided.

The battery module or battery pack may be used as a power source for one or more medium- to large-sized devices, such as power tools; electric vehicles, including electric vehicles (EVs), hybrid electric vehicles, and plug-in hybrid electric vehicles (PHEVs); or power storage systems.

Hereinafter, the present invention will be described in more detail through specific examples. However, the following examples are intended to enable those skilled in the art to fully understand and easily practice the present invention. The scope of the present invention is not limited to the following examples.

**Examples 1 to 5 and Comparative Examples 1 to 4**

A lithium iron phosphate-based compound having particle size characteristics as shown in Table 1 below, and having a composition similar to $LiFePO_4$, was used as a positive electrode active material, and carbon black having particle size characteristics and a specific surface area as shown in Table 1 below was used as a conductive agent to manufacture positive electrodes of Examples 1 to 5 and Comparative Examples 1 to 4.

Specifically, the positive electrode active material, conductive agent, and a PVDF binder were mixed at a weight ratio of 96:1.2:2.8, and a N-methylpyrrolidone solvent was added to achieve the solid content of 60%. The mixture was then mixed using a homogenizer at 2,500 rpm for 1 hour to produce a positive electrode slurry.

Then, the positive electrode slurry was applied to one surface of an aluminum current collector, dried at 130°C, and rolled twice using a roll-to-roll rolling machine at a linear pressure of 1 ton/cm to manufacture a positive electrode.

In addition, the values of $R_1$, $R_2$, and $R_3$, represented by Equations 1 to 3 below, were calculated and shown in Table 1.

$$R_1 = \{[\text{Average particle diameter } (D_{50}) \text{ value of positive electrode active material}] \times [\text{BET specific surface area value of conductive agent}]\} / [\text{Average particle diameter } (D_{50}) \text{ value of conductive agent}]^2 \qquad [\text{Equation 1}]$$

$$R_2 = [\text{Average particle diameter } (D_{50}) \text{ value of positive electrode active material}] / [\text{Average particle diameter } (D_{50}) \text{ value of conductive agent}] \qquad [\text{Equation 2}]$$

[Equation 3] $$R_3 = [\text{BET specific surface area value of conductive agent}] / [\text{Average particle diameter } (D_{50}) \text{ value of conductive agent}] \qquad [\text{Equation 3}]$$

In Equations 1 to 3, the average particle diameter $(D_{50})$ value $(\mu m)$ of positive electrode active material, the BET specific surface area value $(m^2/g)$ of conductive agent, and the average particle diameter $(D_{50})$ value $(\mu m)$ of conductive agent are each dimensionless numbers with the units omitted.

[Table 1]

| | Average particle diameter of positive electrode active material $(D_{50})$ [$\mu$m] | Average particle diameter of conductive agent $(D_{50})$ [$\mu$m] | BET specific surface area of conductive agent [$m^2/g$] | $R_1$ value | $R_2$ value | $R_3$ value |
|---|---|---|---|---|---|---|
| Example 1 | 1.1 | 1.0 | 273 | 300.3 | 1.1 | 273.0 |
| Example 2 | 1.1 | 1.1 | 240 | 218.2 | 1.0 | 218.2 |
| Example 3 | 1.05 | 1.0 | 270 | 283.5 | 1.1 | 270.0 |
| Example 4 | 1.05 | 0.85 | 301 | 437.4 | 1.2 | 354.1 |
| Example 5 | 0.6 | 0.65 | 334 | 474.3 | 0.9 | 513.8 |
| Comparative Example 1 | 0.6 | 0.7 | 185 | 226.5 | 0.9 | 264.3 |
| Comparative Example 2 | 1.1 | 0.65 | 170 | 442.6 | 1.7 | 261.5 |
| Comparative Example 3 | 0.6 | 1.2 | 205 | 85.4 | 0.5 | 170.8 |
| Comparative Example 4 | 1.1 | 0.7 | 317 | 711.6 | 1.6 | 452.9 |

1) The average particle diameter $(D_{50})$ was measured by dispersing the positive electrode active material powder and conductive agent powder in a dispersion medium, introducing same into a laser diffraction particle size measuring device (Microtrac MT 3000), irradiating same with ultrasonic waves of approximately 28 kHz at an output of 60 W, obtaining a volume-cumulative particle size distribution graph, and then obtaining the particle size corresponding to 50% of the volume-cumulative amount. 2) The specific surface area was measured by a BET method and was calculated from the nitrogen gas adsorption amount at liquid nitrogen temperature (77 K) using BELSORP-mino II of BEL Japan.

**Experimental Example 1: Capacity Retention Evaluation**

**<Manufacture of Lithium Secondary Battery>**

Artificial graphite was used as a negative electrode active material. A negative electrode including a negative electrode active material layer containing the negative electrode active material, CMC and SBR as negative electrode binders, and carbon black as a negative electrode conductive agent in a weight ratio of 96:1.0:2.5:0.5 was prepared. Copper foil was used as a negative electrode current collector.

An electrode assembly was manufactured by interposing a separator between the positive electrode and the negative electrode manufactured in Examples 1 to 4 and Comparative Examples 1 to 4 and was then placed inside a battery case, and an electrolyte was injected into the case to manufacture a lithium secondary battery. The electrolyte was prepared by dissolving lithium hexafluorophosphate ($LiPF_6$) at a concentration of 1.2 M in a solvent containing ethylene carbonate (EC), dimethyl carbonate (DMC), and ethyl methyl carbonate (EMC) in a volume ratio of 3:4:3.

**<Capacity Retention Evaluation>**

Each lithium secondary battery manufactured above was charged to 3.8 V using an electrochemical charger/-discharger at 45°C under CC/CV, 0.5 C conditions, and then discharged to 2.5 V under CC, 1.0 C conditions. With this procedure as one cycle, charge/discharge was performed, and the capacity retention was measured.

The capacity retention was calculated using the equation below, and the capacity retention at 100 cycles is shown in Table 2.

Capacity retention (%) = (Discharge capacity after 100 cycles / Discharge capacity after 1 cycle) x 100

**Experimental Example 2: Resistance Increase Rate Evaluation**

Each lithium secondary battery manufactured above was charged to 3.8 V using an electrochemical charger/-discharger at 25°C under CC/CV, 0.5 C conditions, and then discharged to 2.5 V under CC, 1.0 C conditions. With this procedure as one cycle, cycle charge/discharge was performed.

After one cycle of charge/discharge, the discharge capacity after one cycle was measured using an electrochemical charger/discharger. The SOC was adjusted to 50%, a 2.5 C pulse was applied for 10 seconds, and the initial resistance was calculated from the difference between the voltage before and after the application of pulse.

Furthermore, the resistance after cycle charge/discharge was calculated using the same method described above, and the resistance increase rate was calculated using the equation below. The resistance increase rate at 100 cycles is shown in Table 2 below.

Resistance increase rate (%) = {(Resistance after 100 cycles of charge and discharge - Initial resistance) / Initial resistance} x 100

[Table 2]

|  | Capacity retention (%, @100th cycle) | Resistance increase rate (%, @100th cycle) |
|---|---|---|
| Example 1 | 92.5 | 2.97 |
| Example 2 | 92.2 | 3.54 |
| Example 3 | 92.4 | 3.37 |
| Example 4 | 92.1 | 5.63 |
| Example 5 | 92.2 | 3.97 |
| Comparative Example 1 | 87.9 | 13.51 |
| Comparative Example 2 | 87.2 | 14.10 |

(continued)

|  | Capacity retention (%, @100th cycle) | Resistance increase rate (%, @100th cycle) |
|---|---|---|
| Comparative Example 3 | 87.9 | 22.18 |
| Comparative Example 4 | 87.0 | 22.07 |

Referring to Table 2 above, it can be confirmed that the lithium secondary batteries of Examples 1 to 5, in which the BET specific surface area of the conductive agent is in the range of 200 $m^2$/g to 400 $m^2$/g and the value of $R_1$ is in the range of 180 to 500, exhibit superior cycle capacity retention and low resistance increase rate compared to the lithium secondary batteries of Comparative Examples 1 to 4, not satisfying the conditions.

**Claims**

1.  A positive electrode comprising:

    a current collector; and
    a positive electrode active material layer disposed on the current collector, wherein
    the positive electrode active material layer comprises a positive electrode active material, a conductive agent, and a binder,
    the positive electrode active material comprises a lithium iron phosphate-based compound,
    the conductive agent comprises carbon black,
    the conductive agent has a BET specific surface area of 200 $m^2$/g to 400 $m^2$/g, and
    a value of $R_1$ represented by the following Equation 1 is 180 to 500:

    $R_1$ = {[Average particle diameter ($D_{50}$) value of positive electrode active material] x [BET specific surface area value of conductive agent]} / [Average particle diameter ($D_{50}$) value of conductive agent]$^2$          [Equation 1]

    in Equation 1, the average particle diameter ($D_{50}$) value ($\mu$m) of positive electrode active material, the BET specific surface area value ($m^2$/g) of conductive agent, and the average particle diameter ($D_{50}$) value ($\mu$m) of conductive agent are dimensionless numbers with the units omitted.

2.  The positive electrode according to claim 1, wherein a value of $R_2$ represented by the following Equation 2 is 0.9 to 1.1:

    $R_2$ = [Average particle diameter ($D_{50}$) value of positive electrode active material] / [Average particle diameter ($D_{50}$) value of conductive agent].          [Equation 2]

3.  The positive electrode according to claim 1, wherein a value of $R_3$ represented by the following Equation 3 is 200 to 450:

    $R_3$ = [BET specific surface area value of conductive agent] / [Average particle diameter ($D_{50}$) value of conductive agent]          [Equation 3]

    in Equation 3, the BET specific surface area value ($m^2$/g) of conductive agent and the average particle diameter ($D_{50}$) value ($\mu$m) of conductive agent are dimensionless numbers with the units omitted.

4.  The positive electrode according to claim 1, wherein an average particle diameter ($D_{50}$) of the conductive agent is 0.7 $\mu$m to 1.3 $\mu$m.

5.  The positive electrode according to claim 1, wherein an average particle diameter ($D_{50}$) of the positive electrode active material is 0.6 $\mu$m to 1.6 $\mu$m.

6.  The positive electrode according to claim 1, wherein the lithium iron phosphate-based compound is represented by the following Formula 1:

[Formula 1] $Li_{1+x}[Fe_{1-y}M_y]PO_4$

in Formula 1, M comprises one or more selected from the group consisting of Ni, Co, Mn, Al, Mg, Y, Zn, In, Ru, Sn, Sb, Ti, Te, Nb, Mo, Cr, Zr, W, Ir, and V, $-0.5 \leq x \leq 0.5$, and $0 \leq y < 1$.

7. The positive electrode according to claim 1, wherein the lithium iron phosphate-based compound further comprises a conductive coating layer.

8. The positive electrode according to claim 1, wherein the conductive agent is comprised in 0.5 wt% to 5.0 wt% based on a total weight of the positive electrode active material layer.

9. The positive electrode according to claim 1, wherein a weight ratio of the positive electrode active material and the conductive agent is 90:10 to 99:1.

10. The positive electrode according to claim 1, wherein the binder comprises one or more selected from the group consisting of styrene-butadiene rubber (SBR), carboxymethyl cellulose (CMC), polyvinylidene fluoride (PVDF) and polytetrafluoroethylene (PTFE).

11. The positive electrode according to claim 1, wherein the positive electrode has a porosity of 15% to 40%.

12. A lithium secondary battery comprising the positive electrode of claim 1.

## INTERNATIONAL SEARCH REPORT

| International application No. |
|---|
| **PCT/KR2025/015232** |

| A. | CLASSIFICATION OF SUBJECT MATTER |
|---|---|

**H01M 4/136**(2010.01)i; **H01M 4/58**(2010.01)i; **H01M 4/62**(2006.01)i; **H01M 4/36**(2006.01)i; **H01M 10/0525**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/136(2010.01); H01M 10/0525(2010.01); H01M 4/131(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 리튬 인산철(lithium iron phosphate), 카본블랙(carbon black), 비표면적(specific surface area), 입경(particle diameter), 바인더(binder)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2015-0123826 A (TOYO INK SC HOLDINGS CO., LTD. et al.) 04 November 2015 (2015-11-04) paragraphs [0001], [0057]-[0059], [0061], [0063], [0180]-[0182], [0184], [0190]-[0199], [0208]-[0217], [0234]-[0238], [0244]-[0247], [0250]-[0252], [0255]-[0261], [0265]-[0267]; and tables 1-1-1-3 | 1-6,8-10,12 |
| Y | | 7,11 |
| Y | JP 2011-014457 A (NIPPON SHOKUBAI CO., LTD.) 20 January 2011 (2011-01-20) paragraphs [0009], [0012] | 7 |
| Y | JP 2010-225366 A (SANYO ELECTRIC CO., LTD.) 07 October 2010 (2010-10-07) claims 1, 3 | 11 |
| A | WO 2016-194759 A1 (FUJIFILM CORPORATION) 08 December 2016 (2016-12-08) claims 1-13 | 1-12 |

☑ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 December 2025** | **30 December 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2025/015232** |

**C. DOCUMENTS CONSIDERED TO BE RELEVANT**

| Category* | Citation of document, with indication, where appropriate, of the relevant passages | Relevant to claim No. |
|---|---|---|
| A | KR 10-2021-0006377 A (DENKA COMPANY LIMITED) 18 January 2021 (2021-01-18)<br>claims 1-6 | 1-12 |

Form PCT/ISA/210 (second sheet) (July 2022)

## INTERNATIONAL SEARCH REPORT
### Information on patent family members

International application No.

**PCT/KR2025/015232**

| Patent document cited in search report | | | Publication date (day/month/year) | Patent family member(s) | | | Publication date (day/month/year) |
|---|---|---|---|---|---|---|---|
| KR | 10-2015-0123826 | A | 04 November 2015 | CN | 105073915 | A | 18 November 2015 |
| | | | | JP | 2014-193986 | A | 09 October 2014 |
| | | | | JP | 2014-193996 | A | 09 October 2014 |
| | | | | JP | 2014-194001 | A | 09 October 2014 |
| | | | | JP | 2015-101615 | A | 04 June 2015 |
| | | | | JP | 5454725 | B1 | 26 March 2014 |
| | | | | JP | 5601416 | B1 | 08 October 2014 |
| | | | | JP | 6142418 | B2 | 07 June 2017 |
| | | | | JP | 6244923 | B2 | 13 December 2017 |
| | | | | KR | 10-2217137 | B1 | 19 February 2021 |
| | | | | WO | 2014-132809 | A1 | 04 September 2014 |
| JP | 2011-014457 | A | 20 January 2011 | | None | | |
| JP | 2010-225366 | A | 07 October 2010 | JP | 5279567 | B2 | 04 September 2013 |
| WO | 2016-194759 | A1 | 08 December 2016 | CN | 107735887 | A | 23 February 2018 |
| | | | | JP | 6452814 | B2 | 16 January 2019 |
| | | | | US | 10424778 | B2 | 24 September 2019 |
| | | | | US | 2018-0090748 | A1 | 29 March 2018 |
| | | | | WO | 2016-194759 | A1 | 22 March 2018 |
| KR | 10-2021-0006377 | A | 18 January 2021 | CN | 112106233 | A | 18 December 2020 |
| | | | | EP | 3767709 | A1 | 20 January 2021 |
| | | | | JP | 7337049 | B2 | 01 September 2023 |
| | | | | US | 12249709 | B2 | 11 March 2025 |
| | | | | US | 2021-0119206 | A1 | 22 April 2021 |
| | | | | WO | 2019-216275 | A1 | 14 November 2019 |

Form PCT/ISA/210 (patent family annex) (July 2022)

**EP 4 773 217 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240131920